# EUROPEAN PATENT APPLICATION

(11) **EP 4 477 712 A1**
(43) Date of publication of application: **18.12.2024**
(21) Application number: 23752698.3
(22) Date of filing: 27.01.2023
(51) Int. Cl.: C08L 83/04, C08K 3/013, C08K 3/22, C08K 3/28, C08K 5/5419

(54) **THERMALLY CONDUCTIVE COMPOSITION AND CURED PRODUCT OF SAME**

(30) Priority: 10.02.2022 JP 2022019242
(71) Applicant: SHIN-ETSU CHEMICAL CO., LTD., Tokyo 1000005 (JP)
(72) Inventor: TSUCHIDA, Kazuhiro, Annaka-shi, Gunma 379-0224 (JP); ENDO, Akihiro, Annaka-shi, Gunma 379-0224 (JP); KIMURA, Tsuneo, Annaka-shi, Gunma 379-0224 (JP)
(74) Representative: Mewburn Ellis LLP
(86) International application number: PCT/JP2023/002551
(87) International publication number: WO 2023/153233

(57) **Abstract**

Provided is a thermally conductive composition that includes
(A) 100 parts by mass of an organopolysiloxane that is represented by formula (1) and is a liquid at 23°C

(R₃SiO_{1/2})ₐ(R₂SiO_{2/2})_{b}(RSiO_{3/2})_{c}(SiO_{4/2})_{d}(O_{1/2}X)ₑ (1)

(in the formula, R is a hydrogen atom, an alkyl group, an aryl group, an aralkyl group, or an alkenyl group, X is a hydrogen atom or an alkyl group, a, b, c, and d are numbers that satisfy 0 ≤ a ≤ 0.8, 0 ≤ b ≤ 0.8, 0.2 ≤ c ≤ 1, 0 ≤ d ≤ 0.8, and a+b+c+d = 1, and e is a number that satisfies 0 ≤ e ≤ 0.1) and
(B) 2,000-7,000 parts by mass of a thermally conductive filler. The viscosity of the thermally conductive composition at 25°C is no more than 1,000 Pa ·s.

## Description

### TECHNICAL FIELD

The present invention relates to a heat-conductive composition and a cured product thereof. More particularly, the invention relates to a heat-conductive composition which is used as a heat-conducting material interposed at thermal interfaces between heat-generating electronic parts and heat-dissipating parts such as a heat sink and a metal casing to cool the heat-generating electronic parts. The invention also relates to a cured product thereof.

### BACKGROUND ART

LSI chips such as CPU, driver IC, and memory used in electronic devices such as personal computers, digital video disks, and cellular phones generate larger amounts of heat by themselves as they have higher performance, higher speed, smaller size, and higher integration. An increase in chip temperature due to such heat causes a chip to malfunction and break. So, many heat dissipation methods for suppressing increases in chip temperature during operation and heat-dissipating members used in the methods have been proposed.

Furthermore, in recent years, hybrid cars, which are driven using both an engine and a motor, and electric vehicles for which gasoline is not used have been actively developed in consideration of the global environment. Along with this, power enhancement of motors has been carried out.

With the rapid progress in downsizing and power enhancement of motors, resins for sealing coil parts are required to have properties to quickly dissipate heat which is generated in coil sections and also required to have toughness to withstand heat cycles associated with ON/OFF operation.

As resins for impregnation and sealing of coils, epoxy resins are suitably used because of having high mechanical properties in addition to good heat resistance and chemical resistance. Furthermore, epoxy resins, in combination with curing agents and various additives, can achieve formulation designs depending on the purposes, and thus are widely used for sealing and molding of electrical parts (Patent Documents 1 and 2).

However, the heat resistance of epoxy resins is less than sufficient for increased heat generation associated with the power enhancement of motors as described above, and resin designs with higher reliability are desired.

In electronic devices and the like, heat sinks formed by using plates of highly heat-conductive metals such as aluminum and copper have been conventionally used in order to suppress increases in chip temperature during operation. Such a heat sink conducts heat generated from chips and dissipates the heat through its surface due to a temperature difference from the outside air.

To efficiently conduct the heat generated from the chips to the heat sink, the heat sink needs to be in close contact with the chips. Since there are a difference in height between the chips and a tolerance due to assembly processing, a flexible sheet or grease is interposed between the chips and the heat sink, and thermal conduction from the chips to the heat sink is achieved through the sheet or grease.

Generally known compositions used for such a sheet or grease include silicone compositions filled with heat-conductive fillers (Patent Documents 3 to 12). These heat-conductive silicone compositions are composed mainly of polymers having straight silicone skeletons, and cured products thereof have strong rubber properties characterized by flexibility and are not as hard as epoxy resin cured products.

Silicone resins having three-dimensional crosslinked structures are candidates for crosslinked binders having excellent heat resistance and hardness. Known heat-conductive silicone compositions obtained using such silicone resins include insulating compositions obtained by compression molding of powder containing a silsesquioxane compound or silsesquioxane derivative and a heat-conductive filler such as boron nitride (Patent Documents 13 and 14). These insulating compositions have no flowability when dispersed in organic solvents or in the absence of solvents.

Thus, there is a need for heat-conductive compositions which have flowability and cure into products having sufficient strength.

### PRIOR ART DOCUMENTS

### PATENT DOCUMENTS

Patent Document 1: JP-A 2012-117017
Patent Document 2: JP-A 2009-13213
Patent Document 3: JP-A H02-196453
Patent Document 4: JP-A H07-266356
Patent Document 5: JP-A H08-238707
Patent Document 6: JP-A H09-296114
Patent Document 7: JP-A 2000-327917
Patent Document 8: JP-A 2001-291807
Patent Document 9: JP-A 2002-234952
Patent Document 10: JP-A 2005-72220
Patent Document 11: JP-A 2013-147600
Patent Document 12: JP-T 2021-518466
Patent Document 13: JP-A 2019-133851
Patent Document 14: WO 2021/153683

### SUMMARY OF INVENTION

### TECHNICAL PROBLEM

An object of the invention, which has been made under the above-mentioned circumstances, is to provide a heat-conductive composition which has flowability even when containing no solvent and excellent thermal conductivity, and exhibits sufficient strength after being cured, and a cured product thereof.

### SOLUTION TO PROBLEM

As a result of intensive studies to achieve the above object, the inventors have found that a heat-conductive composition containing a liquid polysiloxane having a three-dimensional crosslinked structure and a specific amount of heat-conductive filler and also having a specific viscosity exhibits excellent thermal conduction properties and can cure into a product having high strength. The invention is predicated on this finding.

The invention is as defined below.
1. A heat-conductive composition comprising
   (A) an organopolysiloxane having the following formula (1), which is liquid at 23°C: 100 parts by weight,
      [Chem. 1]

      (R₃SiO_{1/2})ₐ(R₂SiO_{2/2})_{b}(RSiO_{3/2})_{c}(SiO_{4/2})_{d}(O_{1/2}X)ₑ (1)

      wherein R is each independently hydrogen, a C₁-C₁₀ alkyl group, C₆-C₁₀ aryl group, C₇-C₁₀ aralkyl group or C₂-C₈ alkenyl group, X is each independently hydrogen or a C₁-C₃ alkyl group, a, b, c and d are numbers satisfying 0 ≤ a ≤ 0.8, 0 ≤ b ≤ 0.8, 0.2 ≤ c ≤ 1, 0 ≤ d ≤ 0.8, and a+b+c+d = 1, and e is a number satisfying 0 ≤ e ≤ 0.1, and
   (B) a heat-conductive filler: 2,000 to 7,000 parts by weight,
      the heat-conductive composition having a viscosity of up to 1,000 Pa s at 25°C.
2. The heat-conductive composition of item 1 wherein component (A) is an organopolysiloxane having the following formula (2):
   [Chem. 2]

   (R¹₃SiO_{1/2})ₐ₁(R¹₂R²SiO_{1/2})ₐ₂(R¹₂HSiO_{1/2})ₐ₃(R¹₂SiO_{2/2})_{b1}(R¹R²SiO_{2/2})_{b2}(R¹HSiO_{2/2})_{b3}(R¹SiO_{3/2})_{c1}( R²SiO_{3/2})_{c2}(HSiO_{3/2})_{c3}(SiO_{4/2})_{d}(O_{1/2}X)ₑ (2)

   wherein R¹ is each independently a C₁-C₁₀ alkyl group, C₆-C₁₀ aryl group or C₇-C₁₀ aralkyl group, R² is each independently a C₂-C₈ alkenyl group, a1, a2, a3, b1, b2, b3, c1, c2 and c3 are numbers of 0 to 1, provided that 0 ≤ (a1+a2+a3) ≤ 0.8, 0 ≤ (b1+b2+b3) ≤ 0.8, 0.2 ≤ (c1+c2+c3) ≤ 1, 0 < (a2+b2+c2), and a1+a2+a3+b1+b2+b3+c1+c2+c3+d = 1 are satisfied, and d, e and X are as defined above.
3. The heat-conductive composition of item 1 or 2 wherein the heat-conductive filler (B) comprises one or more selected from the group consisting of metal oxides and metal nitrides.
4. The heat-conductive composition of any one of items 1 to 3, further comprising
   (C) at least one selected from the group consisting of components (C-1) and (C-2):
      0.01 to 300 parts by weight per 100 parts by weight of component (A),
   (C-1) an alkoxysilane compound having the general formula (3):
      [Chem. 3]

      R³R⁴ₘSi(OR⁵)₃₋ₘ (3)

      wherein R³ is a C₆-C₁₈ alkyl group, R⁴ is each independently a C₁-C₁₂ alkyl group, R⁵ is each independently a C₁-C₃ alkyl group, and m is an integer of 0 to 2,
   (C-2) a dimethylpolysiloxane capped with a trialkoxysilyl group at one end of a molecular chain and having the general formula (4): 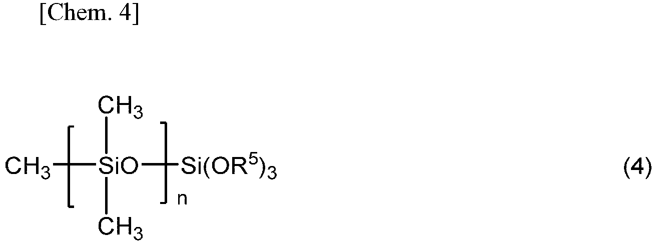 wherein R⁵ is as defined above, and n is an integer of 5 to 100.
5. The heat-conductive composition of any one of items 1 to 4 wherein component (A) has at least two C₂-C₈ alkenyl groups in one molecule, the alkenyl groups being directly bonded to silicon, which composition further comprising
   (D) a compound having at least two hydrogen atoms in one molecule in direct bond to silicon and not having a three-dimensional crosslinked structure: an amount in which a number of hydrogen atoms directly bonded to silicon is 0.1 to 5.0 times a number of alkenyl groups in component (A), and
   (E) a platinum-group metal catalyst: 0.1 to 2,000 ppm based on a weight of component (A) in terms of weight of platinum-group metal.
6. The heat-conductive composition of any one of items 1 to 5 wherein a solvent content is up to 1% by weight based on a total weight of the composition.
7. The heat-conductive composition of any one of items 1 to 6 which has a thermal conductivity of at least 3.0 W/mK.
8. A heat-conductive cured product formed by curing the heat-conductive composition of any one of items 5 to 7.

### ADVANTAGEOUS EFFECTS OF INVENTION

According to the present invention, a heat-conductive composition which has flowability and high thermal conductivity and cures into a product having sufficient strength can be provided.

### DESCRIPTION OF EMBODIMENTS

Now the invention is described in detail.

The invention provides a heat-conductive composition comprising the following components (A) and (B):
(A) an organopolysiloxane having the following formula (1), which is liquid at 23°C,
   [Chem. 5]

   (R₃SiO_{1/2})ₐ(R₂SiO_{2/2})_{b}(RSiO_{3/2})_{c}(SiO_{4/2})_{d}(O_{1/2}X)ₑ (1)

   and
(B) a heat-conductive filler.

### [Component (A)]

Component (A) is an organopolysiloxane having the following formula (1), which is liquid at 23°C (under atmospheric pressure).
[Chem. 6]

(R₃SiO_{1/2})ₐ(R₂SiO_{2/2})_{b}(RSiO_{3/2})_{c}(SiO_{4/2})_{d}(O_{1/2}X)ₑ (1)

Herein R is each independently hydrogen, a C₁-C₁₀ alkyl group, C₆-C₁₀ aryl group, C₇-C₁₀ aralkyl group or C₂-C₈ alkenyl group.

The alkyl group R may be straight, branched or cyclic, and is preferably a C₁ to C₈ alkyl group, more preferably a C₁ to C₆ alkyl group. Examples thereof include methyl, ethyl, n-propyl, isopropyl, n-butyl, isobutyl, tert-butyl, n-pentyl, neopentyl, n-hexyl, cyclohexyl, n-heptyl, n-octyl, n-nonyl, and n-decyl.

The aryl group is preferably a C₆ to Ca aryl group. Examples thereof include phenyl, tolyl, and naphthyl.

The aralkyl group is preferably a C₇ to C₉ aralkyl group. Examples thereof include benzyl, phenylethyl, phenylpropyl, and methylbenzyl.

The alkenyl group may be straight, branched or cyclic, and is preferably a C₂ to C₆ alkenyl group, more preferably a C₂ to C₄ alkenyl group. Examples thereof include vinyl, allyl, methallyl, butenyl, hexenyl, cyclohexenyl, and octenyl.

Some or all hydrogen atoms in C-H bonds of these groups may be substituted by halogen atoms such as chlorine, fluorine, and bromine, and one example thereof is 1,1,1-trifluoropropyl (trifluoromethylethyl), which is derived by substituting the 1-position of a propyl group with fluorine atoms.

Inter alia, R is preferably methyl, ethyl, n-propyl, isopropyl, n-butyl, isobutyl, phenyl, benzyl, or vinyl, more preferably methyl, ethyl, phenyl, or vinyl.

X is each independently hydrogen or a C₁-C₃ alkyl group, and examples of such an alkyl group are the same as the C₁-C₃ groups exemplified for R. Inter alia, hydrogen, methyl, and ethyl are preferred.

The subscript "a", "b", "c" and "d" represent the existence ratios of monofunctional to tetrafunctional siloxane units (hereinafter, the monofunctional group is referred to as an M unit, the difunctional group as a D unit, the trifunctional group as a T unit, and the tetrafunctional group as a Q unit) and are numbers satisfying 0 ≤ a ≤ 0.8, 0 ≤ b ≤ 0.8, 0.2 ≤ c ≤ 1, 0 ≤ d ≤ 0.8, and a+b+c+d = 1.

The subscript "e" represents the existence ratio of an OX group directly bonded to silicon and is a number satisfying 0 ≤ e ≤ 0.1.

The subscript "a" is preferably a number satisfying 0 ≤ a ≤ 0.6, more preferably 0.1 ≤ a ≤ 0.6. When "a" exceeds 0.8, a cured product with low hardness is provided.

The subscript "b" is preferably a number satisfying 0 < b ≤ 0.6, more preferably 0.2 ≤ b ≤ 0.6. When "b" exceeds 0.8, the high D unit ratio enhances elastomeric characteristics, resulting in a cured product with low hardness.

The subscript "c" is preferably a number satisfying 0.4 ≤ c < 1, more preferably 0.4 ≤ c ≤ 0.7, still more preferably 0.4 ≤ c ≤ 0.6. When "c" is less than 0.2, it is difficult to achieve both the flowability of the composition and the hardness of the resulting cured product.

The subscript "d" is preferably a number satisfying 0 ≤ d ≤ 0.6, more preferably 0 ≤ d ≤ 0.1. When "d" exceeds 0.8, the high Q unit ratio significantly impairs the flowability of component (A).

The subscript "e" is preferably a number satisfying 0 ≤ e ≤ 0.05. When "e" exceeds 0.1, the organopolysiloxane as component (A) has poor stability, and increase of viscosity and gelation tend to occur.

Component (A) may be an alkenyl-containing organopolysiloxane having the following formula (2). This organopolysiloxane can form a crosslinking through hydrosilylation with component (D) in the presence of component (E) described later, thus providing a cured product.
[Chem. 7]

(R¹₃SiO_{1/2})ₐ₁(R¹₂R²SiO_{1/2})ₐ₂(R¹₂HSiO_{1/2})ₐ₃(R¹₂SiO_{2/2})_{b1}(R¹R²SiO_{2/2})_{b2}(R¹HSiO_{2/2})_{b3}(R¹SiO_{3/2})_{c1}( R²SiO_{3/2})_{c2}(HSiO_{3/2})_{c3}(SiO_{4/2})_{d}(O_{1/2}X)ₑ (2)

Herein R¹ is each independently a C₁-C₁₀ alkyl group, C₆-C₁₀ aryl group or C₇-C₁₀ aralkyl group, R² is each independently a C₂-C₈ alkenyl group, the subscripts "a1", "a2", "a3", "b1", "b2", "b3", "c1", "c2" and "c3" are numbers of 0 to 1, provided that 0 ≤ (a1+a2+a3) ≤ 0.8, 0 ≤ (b1+b2+b3) ≤ 0.8, 0.2 ≤ (c1+c2+c3) ≤ 1, 0 < (a2+b2+c2), and a1+a2+a3+b1+b2+b3+c1+c2+c3+d = 1 are satisfied. The subscript "d", "e" and X are as defined above.

Examples of the C₁-C₁₀ alkyl group, C₆-C₁₀ aryl group and C₇-C₁₀ aralkyl group which are represented by R¹ and the C₂-C₈ alkenyl group R² are the same as exemplified for R. Inter alia, R¹ is preferably methyl or phenyl, and R² is preferably vinyl.

The subscript "a1", "a2", "a3", "b1", "b2", "b3", "c1", "c2" and "c3" are preferably numbers of 0 to 0.8, more preferably numbers of 0 to 0.6.

The subscript "a1", "a2" and "a3" are numbers satisfying 0 ≤ (a1+a2+a3) ≤ 0.8, preferably 0 ≤ (a1+a2+a3) ≤ 0.6, more preferably 0.1 ≤ (a1+a2+a3) ≤ 0.6. When the sum a1+a2+a3 exceeds 0.8, a cured product with low hardness is provided.

The subscript "b1", "b2" and "b3" are numbers satisfying 0 ≤ (b1+b2+b3) ≤ 0.8, preferably 0 < (b1+b2+b3) ≤ 0.6, more preferably 0.2 ≤ (b1+b2+b3) ≤ 0.6. When the sum b1+b2+b3 exceeds 0.8, the high D unit ratio enhances elastomeric characteristics, resulting in a cured product with low hardness.

The subscript "c1", "c2" and "c3" are numbers satisfying 0.2 ≤ (c1+c2+c3) ≤ 1, preferably 0.4 ≤ (c1+c2+c3) < 1, more preferably 0.4 ≤ (c1+c2+c3) ≤ 0.7, still more preferably 0.4 ≤ (c1+c2+c3) ≤ 0.6. When the sum c1+c2+c3 is less than 0.2, it is difficult to achieve both the flowability of the composition and the hardness of the resulting cured product.

The sum (a2+b2+c2), which represents the total ratio of constituent units having alkenyl groups directly bonded to silicon, is a number satisfying 0 < (a2+b2+c2), preferably 0.1 ≤ (a2+b2+c2) ≤ 0.3.

The sum (a3+b3+c3), which represents the total ratio of constituent units having hydrogen atoms directly bonded to silicon, is preferably a number satisfying 0 ≤ (a3+b3+c3) ≤ 0.2, more preferably a3 = b3 = c3 = 0.

Component (A) may be prepared by the method of preparing ordinary organopolysiloxanes, for example, obtained from hydrolytic condensation of a hydrolyzable group-containing silane compound.

The hydrolyzable group-containing silane compound is not particularly limited as long as it is a silane compound containing 1 to 4 hydrolyzable groups such as chloro or alkoxy on silicon atom(s) and having an organic substituent satisfying the above-mentioned conditions.

Examples include tetrachlorosilane, tetramethoxysilane, tetraethoxysilane, tetraisopropoxysilane, tetrabutoxysilane, methyltrichlorosilane, methyltrimethoxysilane, methyltriethoxysilane, methyltriisopropoxysilane, methyltributoxysilane, dimethyldimethoxysilane, dimethyldiethoxysilane, dimethyldiisopropoxysilane, trimethylchlorosilane, trimethylmethoxysilane, trimethylethoxysilane, trimethylisopropoxysilane, ethyltrichlorosilane, ethyltrimethoxysilane, ethyltriethoxysilane, propyltrichlorosilane, propyltrimethoxysilane, propyltriethoxysilane, butyltrichlorosilane, butyltrimethoxysilane, butyltriethoxysilane, hexyltrichlorosilane, hexyltrimethoxysilane, hexyltriethoxysilane, phenyltrichlorosilane, phenyltrimethoxysilane, phenyltriethoxysilane, cyclohexyltrichlorosilane, cyclohexyltrimethoxysilane, cyclohexyltriethoxysilane, propylmethyldichlorosilane, propylmethyldimethoxysilane, propylmethyldiethoxysilane, hexylmethyldichlorosilane, hexylmethyldimethoxysilane, hexylmethyldiethoxysilane, phenylmethyldichlorosilane, phenylmethyldimethoxysilane, phenylmethyldiethoxysilane, diphenyldichlorosilane, diphenyldimethoxysilane, diphenyldiethoxysilane, dimethylphenylchlorosilane, dimethylphenylmethoxysilane, dimethylphenylethoxysilane, and partial hydrolyzates thereof. Inter alia, methoxysilane and ethoxysilane are preferred for ease of operation, ease of distillation of by-products, and availability of reactants.

The silane compound may be used alone or in admixture.

In the practice of hydrolysis, a hydrolytic catalyst may be used. Any well-known hydrolytic catalysts may be used. Catalysts whose aqueous solutions exhibit an acidity corresponding to pH 1 to 7 (acidic catalysts) are preferred, and acidic hydrogen halides, sulfonic acids, carboxylic acids, acidic or weakly acidic inorganic salts, and solid acids such as ion exchange resins are especially preferred.

Examples of the acidic catalysts include hydrogen fluoride, hydrochloric acid, nitric acid, sulfuric acid, methanesulfonic acid, p-toluenesulfonic acid, formic acid, acetic acid, maleic acid, benzoic acid, lactic acid, and cation exchange resins having a sulfonic acid or carboxylic acid group on their surface.

Although the amount of the hydrolytic catalyst used is not particularly limited, the amount is preferably 0.0002 to 0.5 mole per mole of the hydrolyzable silane, in view of promotion of reaction and easy removal of the catalyst at the end of reaction.

Although the ratio of the amount of the hydrolyzable silane to the amount of water needed in hydrolytic condensation reaction is not particularly limited, a ratio of 0.1 to 10 moles of water per mole of the hydrolyzable silane is preferred for preventing the catalyst from deactivation and allowing the reaction to run to a full extent, and from the aspect of easy removal of water at the end of reaction.

Although the temperature during hydrolytic condensation reaction is not particularly limited, a temperature of -10°C to 150°C is preferred for enhancing the reaction rate and preventing an organic functional group on the hydrolyzable silane from being decomposed.

Upon hydrolytic condensation, an organic solvent may be used. Examples of the organic solvent used herein include methanol, ethanol, propanol, acetone, methyl ethyl ketone, methyl isobutyl ketone, tetrahydrofuran, toluene and xylene.

Component (A) contains preferably at least 85% by weight, more preferably at least 90% by weight of non-volatiles exclusive of the solvent and the like. More volatiles can cause degradation of outer appearance and lowering of mechanical properties due to formation of voids upon curing of the composition.

The viscosity of component (A) at 23°C is preferably 100 to 50,000 mPa·s, more preferably 500 to 10,000 mPa s, particularly preferably 1,000 to 5,000 mPa s. Within this range, the flowability of the heat-conductive composition and the strength of the cured product will be better. The viscosity is measured at 23°C by a Brookfield rotational viscometer (rotational speed: 30 to 60 rpm).

Examples of component (A) include those having the following formulae, but are not limited thereto. Inter alia, those having an alkenyl group directly bonded to silicon are preferred, and those having at least two alkenyl groups in one molecule in direct bond to silicon are more preferred.
[Chem. 8]

(Me₃SiO_{1/2})ₐ₁(Me₂SiO_{2/2})_{b1}(MeSiO_{3/2})_{c1}(O_{1/2}H)ₑ

(Me₃SiO_{1/2})ₐ₁(Me₂SiO_{2/2})_{b1}(MeSiO_{3/2})_{c1}(SiO₂)_{d}(O_{1/2}H)ₑ

(Me₃SiO_{1/2})ₐ₁(MeViSiO_{2/2})_{b2}(Me₂SiO_{2/2})_{b1}(MeSiO_{3/2})_{c1}(O_{1/2}H)ₑ

(Me₃SiO_{1/2})ₐ₁(MeViSiO_{2/2})_{b2}(MeHSiO_{2/2})_{b3}(MeSiO_{3/2})_{c1}(O_{1/2}H)ₑ

(Me₃SiO_{1/2})ₐ₁(Me₂SiO_{2/2})_{b1}(MeViSiO_{2/2})_{b2}(MeSiO_{3/2})_{c10}(PhSiO_{3/2})_{c11}(O_{1/2}H)ₑ

(Me₃SiO_{1/2})ₐ₁(MeViSiO_{2/2})_{b2}(MeHSiO_{2/2})_{b3}(PhSiO_{3/2})_{c1}(O_{1/2}H)ₑ

Herein, the subscripts "a1", "b1", "b2", "b3", "c1", "d" and "e" are as defined above. The subscripts "c10" and "c11" are numbers satisfying c10 ≥ 0, c11 ≥ 0, and c10+c11 = c1. Me is methyl, Ph is phenyl, and Vi is vinyl.

The organopolysiloxane as component (A) may be a single composition or a mixture of plural compounds of different compositions. The composition of the invention is preferably prepared by mixing a plurality of compounds of different average composition.

### [Component (B)]

Component (B) is a heat-conductive filler. Examples of the heat-conductive filler as component (B) include metals such as copper, silver, nickel, zinc, and stainless steel; metal oxides such as alumina, silica, magnesia, red iron oxide, beryllia, titania, and zirconia; metal nitrides such as aluminum nitride, silicon nitride, and boron nitride; artificial diamond; silicon carbide; and inorganic powders such as carbon. Known heat-conductive fillers may be used, and preferred are one or more selected from the group consisting of metal oxides and metal nitrides.

The shape of the heat-conductive filler may be spherical, irregular, needle or plate, though not limited thereto.

The heat-conductive filler may be subjected to surface treatment as long as the benefits of the invention are not impaired. Examples of the surface treatment include treatment with silane, titanate, or other coupling agents and plasma treatment.

The average particle size of the heat-conductive filler is preferably 0.1 to 100 µm, more preferably 0.5 to 90 µm, still more preferably 1 to 80 µm. It is noted that the average particle size is a volume average particle size as measured by a particle size distribution analyzer Microtrac MT3300EX (Nikkiso Co., Ltd.).

The amount of the heat-conductive filler added is 2,000 to 7,000 parts by weight, preferably 2,300 to 5,000 parts by weight per 100 parts by weight of component (A). Too much amounts of the heat-conductive filler may result in a brittle cured product in the case of use as a curable composition, whereas too small amounts of the heat-conductive filler may fail to provide the desired thermal conductivity.

Component (B) may be used alone or in combination of two or more.

### [Component (C)]

The heat-conductive composition of the invention may further include, as component (C), at least one selected from the group consisting of components (C-1) and (C-2). These interact with the surface of the heat-conductive filler to improve dispersibility in siloxane.
(C-1) Alkoxysilane compound having the general formula (3)
(C-2) Dimethylpolysiloxane capped with a trialkoxysilyl group at one end of the molecular chain and having the general formula (4)
[Chem. 9]

R³R⁴ₘSi(OR⁵)₃₋ₘ (3)

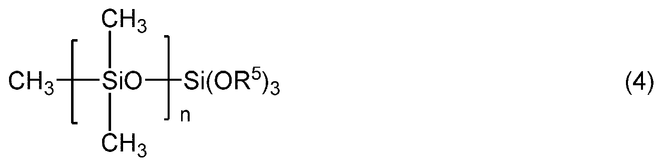

Herein R³ is a C₆-C₁₈ alkyl group, R⁴ is each independently a C₁-C₁₂ alkyl group, R⁵ is each independently a C₁-C₃ alkyl group, m is an integer of 0 to 2, and n is an integer of 5 to 100.

The C₆-C₁₈ alkyl group R³ may be straight, branched or cyclic, and is preferably a C₈-C₁₂ alkyl group, more preferably a C₈-C₁₀ alkyl group. Examples thereof include n-hexyl, cyclohexyl, n-octyl, n-decyl, n-dodecyl, n-tetradecyl, n-hexadecyl, and n-octadecyl.

The C₁-C₁₂ alkyl group R⁴ may be straight, branched or cyclic, and is preferably a C₁-C₁₀ alkyl group, more preferably a C₁-C₈ alkyl group. Examples thereof are the same as exemplified for R, and further include n-undecyl and n-dodecyl. Inter alia, methyl is preferred.

The C₁-C₃ alkyl group R⁵ may be straight or branched. Examples thereof are the same as the C₁-C₃ groups exemplified for R. Inter alia, methyl and ethyl are preferred.

The letter "m" is an integer of 0 to 2, preferably 0.

The letter "n" is an integer of 5 to 100, preferably 10 to 80, more preferably an integer of 20 to 50.

Examples of component (C-1) include hexyltrimethoxysilane, hexylmethyldimethoxysilane, hexyltriethoxysilane, hexylmethyldiethoxysilane, cyclohexyltrimethoxysilane, cyclohexylmethyldimethoxysilane, cyclohexyltriethoxysilane, cyclohexylmethyldiethoxysilane, octyltrimethoxysilane, octylmethyldimethoxysilane, octyltriethoxysilane, octylmethyldiethoxysilane, decyltrimethoxysilane, decylmethyldimethoxysilane, decyltriethoxysilane, decylmethyldiethoxysilane, dodecyltrimethoxysilane, dodecylmethyldimethoxysilane, dodecyltriethoxysilane, dodecylmethyldiethoxysilane, hexadecyltrimethoxysilane, hexadecylmethyldimethoxysilane, hexadecyltriethoxysilane, hexadecylmethyldiethoxysilane, octadecyltrimethoxysilane, octadecylmethyldimethoxysilane, octadecyltriethoxysilane, and octadecylmethyldiethoxysilane, but are not limited thereto. Inter alia, octyltrimethoxysilane, decyltrimethoxysilane, and dodecyltrimethoxysilane are preferred, and decyltrimethoxysilane is more preferred.

Examples of component (C-2) include dimethylpolysiloxane capped with a trimethoxysilyl group at one end of the molecular chain and dimethylpolysiloxane capped with a triethoxysilyl group at one end of the molecular chain, but are not limited thereto.

When component (C) is used, the amount thereof is preferably 1 to 300 parts by weight, more preferably 10 to 200 parts by weight per 100 parts by weight of component (A). Within this range, the dispersibility of the heat-conductive filler can be improved more efficiently.

Component (C) may be used alone or in combination of two or more.

When component (A) has at least two C₂-C₈ alkenyl groups in one molecule in direct bond to silicon, the heat-conductive composition of the invention may further include (D) a compound having at least two hydrogen atoms in one molecule in direct bond to silicon and not having a three-dimensional crosslinked structure, and (E) a platinum-group metal catalyst, thereby forming a heat-curable composition.

### [Component (D)]

Component (D), which is a compound having at least two hydrogen atoms in one molecule in direct bond to silicon (Si-H groups) and not having a three-dimensional crosslinked structure, and forms crosslinks through hydrosilylation with alkenyl groups in component (A) in the presence of component (E), thereby curing the composition. It is noted that this component is distinguished from component (A) in that it does not have a T unit (three-dimensional crosslinked structure).

Component (D) may be, for example, an organohydrogenpolysiloxane having a straight or cyclic siloxane skeleton or a compound in which such organohydrogenpolysiloxanes are linked via hydrocarbon groups.

Examples of the organohydrogenpolysiloxane include methylhydrogencyclopolysiloxane, methylhydrogensiloxane/dimethylsiloxane cyclic copolymers, trimethylsiloxy-endcapped methylhydrogenpolysiloxane, trimethylsiloxy-endcapped dimethylsiloxane/methylhydrogensiloxane copolymers, dimethylhydrogensiloxy-endcapped dimethylpolysiloxane, and dimethylhydrogensiloxy-endcapped dimethylsiloxane/methylhydrogensiloxane copolymers. Examples of the compound in which organohydrogenpolysiloxanes are linked via hydrocarbon groups include addition reaction products of methylhydrogencyclopolysiloxane and diene compounds such as vinylnorbomene. Some or all methyl groups of these exemplary compounds may be substituted by, for example, other alkyl groups.

Component (D) may be used alone or in combination of two or more.

Examples of component (D) include the following, but are not limited thereto. 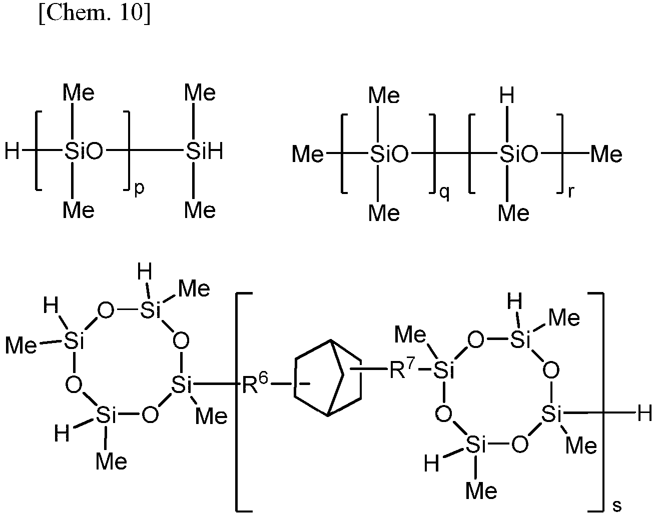 Herein R⁶ and R⁷ are each independently a single bond or a C₁-C₃ alkylene group (e.g., methylene, ethylene, or trimethylene), the letters "p", "q" and "r" are numbers of 1 to 50, and the letter "s" is a number of 1 to 10. Me is methyl.

When component (D) is used, the amount thereof is an amount in which the number of hydrogen atoms directly bonded to silicon in component (D) is preferably 0.1 to 5.0 times, more preferably 0.5 to 2.0 times the number of alkenyl groups in component (A).

### [Component (E)]

The platinum-group metal catalyst as component (E) is a catalyst for promoting the addition reaction between alkenyl groups derived from component (A) and hydrosilyl groups derived from component (D).

Examples of component (E) include elemental platinum-group metals such as platinum (including platinum black), rhodium, and palladium; platinum chlorides, chloroplatinic acid, and chloroplatinates such as H₂PtCl₄·nH₂O, H₂PtCl₆·nH₂O, NaHPtCl₆·nH₂O, KHPtCl₆·nH₂O, Na₂PtCl₆·nH₂O, K₂PtCl₄·nH₂O, PtCl₄·nH₂O, PtCl₂, and Na₂HPtCl₄·nH₂O; alcohol-modified chloroplatinic acid (see U.S. Patent No. 3220972); complexes of chloroplatinic acid and olefins (see U.S. Patent Nos. 3159601, 3159662, and 3775452); supported catalysts comprising platinum group metals such as platinum black and palladium on supports of alumina, silica and carbon; rhodium-olefin complexes; chlorotris(triphenylphosphine)rhodium (known as Wilkinson's catalyst); and complexes of platinum chlorides, chloroplatinic acids and chloroplatinates with vinyl-containing siloxanes, specifically vinyl-containing cyclosiloxanes.

When component (E) is used, the amount thereof is 0.1 to 2,000 ppm, preferably 50 to 1,000 ppm based on the weight of component (A) on a platinum-group metal element weight basis.

### [Other components]

As long as the objects of the invention are not impaired, the heat-conductive composition of the invention may contain known additives in addition to components (A) to (E).

For example, when the composition of the invention is provided as a heat-curable composition, addition reaction inhibitors may be used if necessary. The addition reaction inhibitor may be any known one used for standard addition reaction curable silicone compositions. Examples include acetylene compounds such as ethynylmethylidene carbinol, 1-ethynyl-1-hexanol, and 3-butyn-1-ol, various nitrogen compounds, organophosphorus compounds, oxime compounds, and organochloro compounds.

When an addition reaction inhibitor is used, the amount thereof is preferably 0.01 to 5 parts by weight, more preferably 0.1 to 2 parts by weight per 100 parts by weight of component (A).

The heat-conductive composition of the invention is preferably of solventless type, that is, substantially free of organic solvents, whereas a solvent may be added to the composition prior to use in a particular application or in view of ease of working. As used herein, the term "substantially free" means that the content of a solvent in the composition is up to 1% by weight, especially up to 0.1% by weight.

Examples of the solvent which can be used herein are the same as exemplified for the reaction solvent used in the preparation of organopolysiloxane (A). Notably, the solvents also include ones which are not ingredients intentionally added to the composition, such as reaction solvents that cannot be completely removed by vacuum distillation.

### [Preparation method]

The heat-conductive composition of the invention may be obtained by mixing and agitating components (A), (B) and other components at normal temperature in any desired order.

The viscosity of the heat-conductive composition of the invention at 25°C is up to 1,000 Pa·s, preferably up to 300 Pa·s. Too high a viscosity may impair moldability. The lower limit of the viscosity is not particularly limited, and is typically about 0.1 Pa s.

The viscosity is measured using a rheometer (manufactured by Thermo Fisher Scientific Inc., HAAKE MARS40) at 25°C and a rotational speed of 10 cycles per second with a gap value set to 0.3 mm by a parallel plate rotor (diameter, 20 mm).

In view of the application to heat-generating parts which generate large amounts of heat, the thermal conductivity of the heat-conductive composition of the invention as measured at 25°C by a hot disk method is preferably at least 3.0 W/mK, more preferably at least 4.0 W/mK. The upper limit of the thermal conductivity, which varies depending on the materials used for the heat-conductive filler and is not particularly limited, is typically about 500 W/mK. The thermal conductivity can be controlled by the choice of a combination of the particle size, type, and amount of the heat-conductive filler.

### [Cured product]

The heat-conductive composition of the invention may be cured by a known curing method under known curing conditions. Specifically, the heat-conductive composition may be cured at a heating temperature of typically 80°C to 200°C, preferably 100°C to 160°C for a heating time of about 0.5 minutes to 3 hours, preferably about 1 minute to 1 hour.

The heat-conductive composition of the invention contains, as a principal component, a polysiloxane serving as a binder component, and since this component has a silicone structure necessarily including a three-dimensional siloxane crosslinked structure, the heat-conductive composition has excellent heat transfer performance and provides a high reinforcing effect.

The heat-conductive composition of the invention is suitable for use as, for example, a heat-conductive material which is infiltrated or filled in a coil part or the like of a motor and dissipates heat while maintaining the strength of a frame.

The heat-conductive composition of the invention may be used as, for example, heat-conductive grease. Furthermore, a heat-conductive cured product obtained through hydrosilylation may be used as a heat-dissipating molded member or as a heat-conductive potting material which is filled and cured in a gap in a heat-generating member such as a motor coil.

### EXAMPLES

Examples and Comparative Examples are given below for further illustrating the invention although the invention is not limited thereto.

Apparatuses used for property evaluation in Examples and Comparative Examples are as follows.

### (1) Viscosity

The viscosity of component (A) was measured in a 23°C environment by a Brookfield rotational viscometer (TVB-10 manufactured by Toki Sangyo Co., Ltd., rotor: TM3 or TM4, rotational speed: 30 rpm or 60 rpm).

The viscosity of a heat-conductive composition was measured using a rheometer (manufactured by Thermo Fisher Scientific Inc., HAAKE MARS40) at 25°C and a rotational speed of 10 cycles per second with a gap value set to 0.3 mm by a parallel plate rotor (diameter, 20 mm).

### (2) Thermal conductivity

The thermal conductivity of a composition at 25°C was measured according to ISO 22007-2 using a hot-disk thermal properties analyzer TPS2500 S manufactured by Kyoto Electronics Mfg. Co., Ltd.

### (3) Durometer hardness

A sheet obtained by curing a composition to a thickness of 6 mm was measured according to JIS K 7215 using a hardness tester with a type D indenter manufactured by TECLOCK Co., Ltd.

Components used in Examples and Comparative Examples are shown below. In the following formulae, Me represents methyl, and Ph represents phenyl.

Component (A): Organopolysiloxanes having constitutional unit ratios represented by the following formulae
[Chem. 11]

(Me₃SiO_{1/2})_{0.18}(Me₂SiO_{2/2})_{0.30}(MeSiO_{3/2})_{0.52}(O_{1/2}H)_{0.02} (A-1)

(Viscosity at 23°C: 1,000 mPa·s)
   [Chem. 12]

   (Me₃SiO_{1/2})_{0.18}(Me₂SiO_{2/2})_{0.25}(MeSiO_{3/2})_{0.52}(SiO₂)_{0.05}(O_{1/2}H)_{0.03} (A-2)
(Viscosity at 23°C: 5,000 mPa·s) 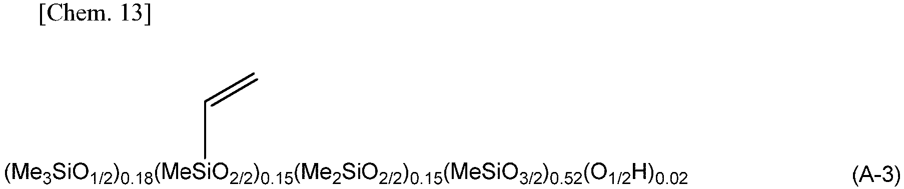
(Viscosity at 23°C: 1,500 mPa·s, vinyl value: 0.41 mol/100 g) 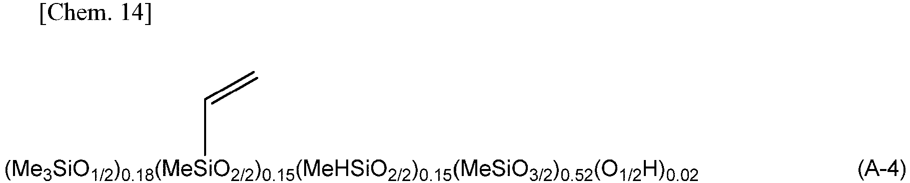
(Viscosity at 23°C: 1,600 mPa·s, vinyl value: 0.41 mol/100 g,
   Si-H group content: 0.41 mol/100 g) 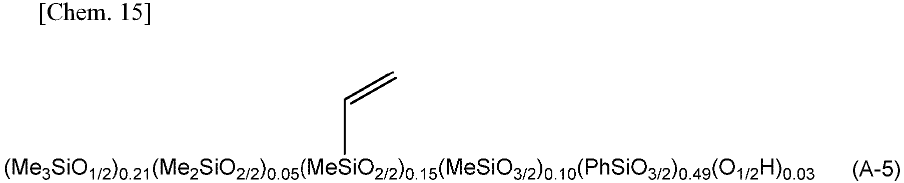
(Viscosity at 23°C: 2,200 mPa·s, vinyl value: 0.30 mol/100 g) 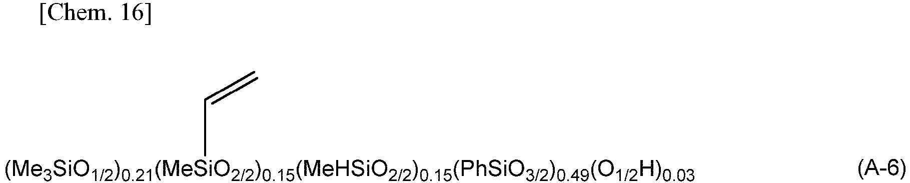
(Viscosity at 23°C: 1,300 mPa·s, vinyl value: 0.30 mol/100 g,
   Si-H group content: 0.30 mol/100 g)
   [Chem. 17]

   (Me₃SiO_{1/2})_{0.23}(Me₂SiO_{2/2})_{0.65}(MeSiO_{3/2})_{0.05}(SiO₂)_{0.07}(O_{1/2}H)_{0.01} (A'-1)
(Viscosity at 23°C: 2,000 mPa·s)
   [Chem. 18]

   (Me₃SiO_{1/2})_{0.20}(Me₂SiO_{2/2})_{0.35}(MeSiO_{3/2})_{0.05}(SiO₂)_{0.40}(O_{1/2}H)_{0.04} (A'-2)
(Viscosity at 23°C: 100,000 mPa·s) 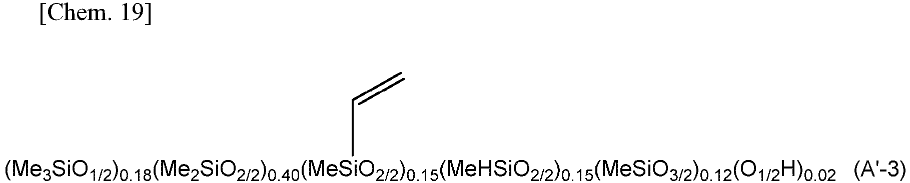
(Viscosity at 23°C: 1,500 mPa·s, vinyl value: 0.38 mol/100 g,
   Si-H group content: 0.38 mol/100 g) 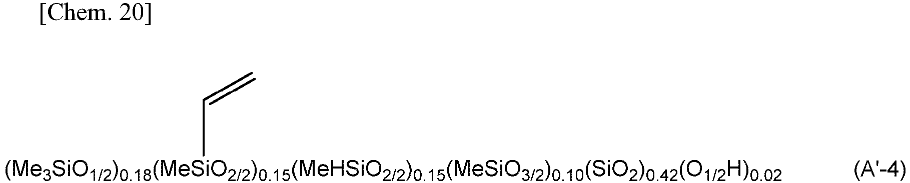
(Viscosity at 23°C: 120,000 mPa·s, vinyl value: 0.48 mol/100 g,
   Si-H group content: 0.48 mol/100 g)

Component (B):
(B-1) Irregular alumina having an average particle size of 3.6 µm
(B-2) Spherical alumina having an average particle size of 17 µm
(B-3) Spherical alumina having an average particle size of 45 µm
(B-4) Spherical alumina having an average particle size of 70 µm
(B-5) Granular aluminum nitride having an average particle size of 1.0 µm
(B-6) Granular aluminum nitride having an average particle size of 20 µm

Component (C): Compound represented by the following formula
[Chem. 21]

C₁₀H₂₁Si(OMe)₃ (C-1)

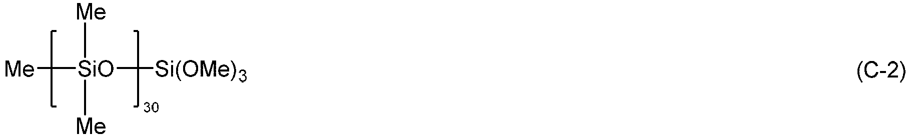

Component (D): Compound represented by the following formula 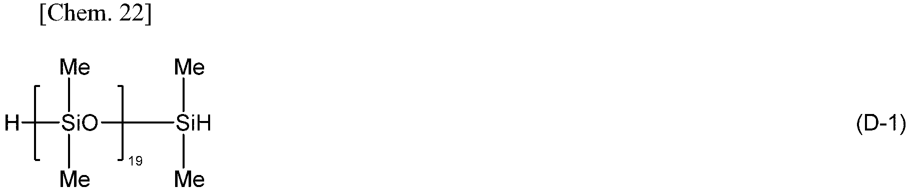
(Si-H group content: 0.14 mol/100 g) 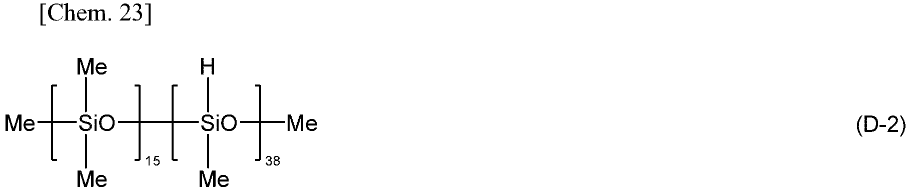
(Si-H group content: 1.11 mol/100 g) 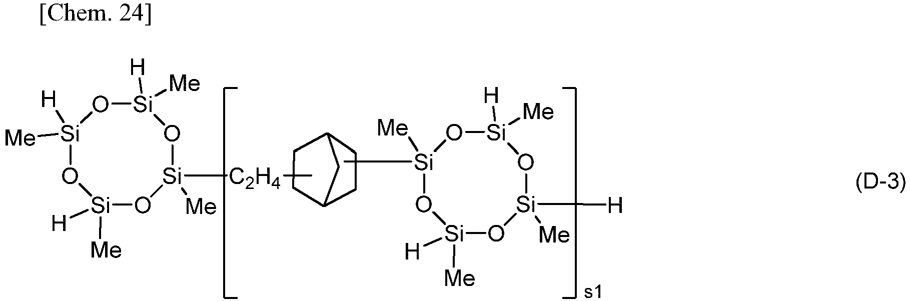
(s1 = number of 3 to 4, Si-H group content: 0.71 mol/100 g)

Component (E):
5% by weight of chloroplatinic acid in 2-ethylhexanol

Component (F):
Ethynylmethylidene carbinol as an addition reaction inhibitor

### [1] Preparation of heat-conductive composition

### [Examples 1-1 to 1-3 and Comparative Examples 1-1 to 1-4]

Components (A) to (C) in proportions (parts by weight) shown in Table 1 were kneaded on a planetary mixer for 60 minutes and then vacuum degassed for 30 minutes to obtain compositions. The viscosity and thermal conductivity of the compositions obtained are shown in Table 1.

**[Table 1]**

| Component (pbw) | Example | | | Comparative Example | | | |
|---|---|---|---|---|---|---|---|
| | 1-1 | 1-2 | 1-3 | 1-1 | 1-2 | 1-3 | 1-4 |
| (A-1) | 100 | 100 | | 100 | 100 | | |
| (A-2) | | | 100 | | | | |
| (A'-1) | | | | | | 100 | |
| (A'-2) | | | | | | | 100 |
| (B-1) | 800 | 2,800 | 1,200 | 3,600 | 200 | 800 | 1,200 |
| (B-2) | 400 | 1,400 | 600 | 1,800 | 200 | 400 | 600 |
| (B-3) | 400 | 1,400 | 600 | 1,800 | 200 | 400 | 600 |
| (B-4) | 400 | 1,400 | 600 | 1,800 | 200 | 400 | 600 |
| (C-1) | 100 | | | 100 | 100 | 100 | |
| (C-2) | | 100 | 100 | | | | 100 |
| Viscosity [Pa·s] | 40 | 300 | 62 | Unmeasurable due to low flowability | 0.1 | 80 | Unmeasurable due to low flowability |
| Thermal conductivity [W/mK] | 3.1 | 8.0 | 4.9 | - | 0.9 | 2.7 | - |

As shown in Table 1, the heat-conductive compositions of Example 1-1 to 1-3 had low viscosity and excellent flowability and exhibited high thermal conductivity.

By contrast, in Comparative Example 1-1, the composition had poor flowability because of containing an excess of heat-conductive fillers, and in Comparative Example 1-2, sufficient thermal conductivity was not exhibited because of insufficient heat-conductive fillers.

In Comparative Example 1-3 in which the organopolysiloxane had a low T unit ratio and a high D unit ratio, the thermal conductivity was low even though the amount of heat-conductive fillers was the same as in Example 1-1. In Comparative Example 1-4 in which the organopolysiloxane had a low T unit ratio and a high Q unit ratio, the viscosity was very high, thus the heat-conductive compositions had poor flowability and were not sufficient for practical use.

### [Examples 1-4 to 1-10 and Comparative Examples 1-5 and 1-6]

Components (A) to (C) and component (F) in proportions (parts by weight) shown in Table 2 were kneaded on a planetary mixer for 60 minutes. Component (D) and component (E) were added thereto, and the mixture was kneaded for 30 minutes and then vacuum degassed for 30 minutes to obtain compositions. The viscosity and thermal conductivity of the compositions obtained are shown in Table 2.

### [2] Preparation of cured product sheet

### [Examples 2-1 to 2-7 and Comparative Examples 2-1 and 2-2]

The compositions obtained in Examples 1-4 to 1-10 and Comparative Examples 1-5 and 1-6 were each poured into a mold of 60 mm × 60 mm × 6 mm and subjected to heat curing at 120°C for 10 minutes using a press molding machine to obtain cured product sheets. The durometer hardness of the cured product sheets obtained is shown in Table 3.

**[Table 2]**

| Component (pbw) | Example | | | | | | | Comparative Example | |
|---|---|---|---|---|---|---|---|---|---|
| | 1-4 | 1-5 | 1-6 | 1-7 | 1-8 | 1-9 | 1-10 | 1-5 | 1-6 |
| (A-3) | 100 | | | | | | | | |
| (A-4) | | 100 | 100 | 100 | 100 | | | | |
| (A-5) | | | | | | 100 | | | |
| (A-6) | | | | | | | 100 | | |
| (A'-3) | | | | | | | | 100 | |
| (A'-4) | | | | | | | | | 100 |
| (B-1) | 1,200 | 1,200 | 1,200 | 1,200 | 1,200 | 1,200 | 1,200 | 1,200 | 1,200 |
| (B-2) | 600 | 600 | 600 | 600 | | 600 | 600 | 600 | 600 |
| (B-3) | 600 | 600 | 600 | 600 | | 600 | 600 | 600 | 600 |
| (B-4) | 600 | 600 | 600 | 600 | | 600 | 600 | 600 | 600 |
| (B-5) | | | | | 900 | | | | |
| (B-6) | | | | | 900 | | | | |
| (C-1) | | | | | | 100 | 100 | | |
| (C-2) | 100 | 100 | 100 | 100 | 100 | | | 100 | 100 |
| (D-1) | 200 | 200 | | | | 200 | | 200 | 200 |
| (D-2) | | | 20 | | 20 | | 20 | | |
| (D-3) | | | | 40 | | | | | |
| (E) | 1 | 1 | 1 | 1 | 1 | 1 | 1 | 1 | 1 |
| (F) | 1 | 1 | 1 | 1 | 1 | 1 | 1 | 1 | 1 |
| H/Vi | 0.66 | 1.66 | 1.54 | 1.69 | 1.54 | 0.91 | 1.74 | 1.72 | 1.57 |
| Viscosity [Pa·s] | 63 | 61 | 65 | 80 | 120 | 80 | 90 | 75 | Unmeasurable due to low flowability |
| Thermal conductivity [W/mK] | 5.1 | 5.3 | 5.2 | 4.9 | 6.0 | 5.1 | 5.1 | 2.6 | 3.8 |

**[Table 3]**

| | Example | | | | | | | Comparative Example | |
|---|---|---|---|---|---|---|---|---|---|
| | 2-1 | 2-2 | 2-3 | 2-4 | 2-5 | 2-6 | 2-7 | 2-1 | 2-2 |
| Composition | 1-4 | 1-5 | 1-6 | 1-7 | 1-8 | 1-9 | 1-10 | 1-5 | 1-6 |
| Type D hardness | 35 | 40 | 48 | 52 | 50 | 53 | 51 | 15 | 70 |

As shown in Tables 2 and 3, the heat-conductive compositions of Example 1-4 to 1-10 had excellent flowability and thermal conductivity, and the cured products obtained by curing these compositions had high hardness.

By contrast, in Comparative Example 1-5 in which an organopolysiloxane having a low T unit ratio and a high D unit ratio was used, the thermal conductivity was low even though the amount of heat-conductive fillers was the same as in Examples 1-4 and 1-5, and the hardness of the cured products obtained was also low.

In Comparative Example 1-6 in which an organopolysiloxane having a low T unit ratio and a high Q unit ratio was used, the viscosity of the organopolysiloxane was very high, thus the heat-conductive compositions had poor flowability and were not sufficient for practical use, and the thermal conductivity was low even though the amount of heat-conductive fillers was the same as in Examples 1-4 and 1-5.

## Claims

1. A heat-conductive composition comprising
(A) an organopolysiloxane having the following formula (1), which is liquid at 23°C: 100 parts by weight,
[Chem. 1]
(R₃SiO_{1/2})ₐ(R₂SiO_{2/2})_{b}(RSiO_{3/2})_{c}(SiO_{4/2})_{d}(O_{1/2}X)ₑ (1)
wherein R is each independently hydrogen, a C₁-C₁₀ alkyl group, C₆-C₁₀ aryl group, C₇-C₁₀ aralkyl group or C₂-C₈ alkenyl group, X is each independently hydrogen or a C₁-C₃ alkyl group, a, b, c and d are numbers satisfying 0 ≤ a ≤ 0.8, 0 ≤ b ≤ 0.8, 0.2 ≤ c ≤ 1, 0 ≤ d ≤ 0.8, and a+b+c+d = 1, and e is a number satisfying 0 ≤ e ≤ 0.1, and
(B) a heat-conductive filler: 2,000 to 7,000 parts by weight,
the heat-conductive composition having a viscosity of up to 1,000 Pa s at 25°C.

2. The heat-conductive composition of claim 1 wherein component (A) is an organopolysiloxane having the following formula (2):
[Chem. 2]
(R¹₃SiO_{1/2})ₐ₁(R¹₂R²SiO_{1/2})ₐ₂(R¹₂HSiO_{1/2})ₐ₃(R¹₂SiO_{2/2})_{b1}(R¹R²SiO_{2/2})_{b2}(R¹HSiO_{2/2})_{b3}(R¹SiO_{3/2})_{c1}( R²SiO_{3/2})_{c2}(HSiO_{3/2})_{c3}(SiO_{4/2})_{d}(O_{1/2}X)ₑ (2)
wherein R¹ is each independently a C₁-C₁₀ alkyl group, C₆-C₁₀ aryl group or C₇-C₁₀ aralkyl group, R² is each independently a C₂-C₈ alkenyl group, a1, a2, a3, b1, b2, b3, c1, c2 and c3 are numbers of 0 to 1, provided that 0 ≤ (a1+a2+a3) ≤ 0.8, 0 ≤ (b1+b2+b3) ≤ 0.8, 0.2 ≤ (c1+c2+c3) ≤ 1, 0 < (a2+b2+c2), and a1+a2+a3+b1+b2+b3+c1+c2+c3+d = 1 are satisfied, and d, e and X are as defined above.

3. The heat-conductive composition of claim 1 or 2 wherein the heat-conductive filler (B) comprises one or more selected from the group consisting of metal oxides and metal nitrides.

4. The heat-conductive composition of any one of claims 1 to 3, further comprising
(C) at least one selected from the group consisting of components (C-1) and (C-2): 0.01 to 300 parts by weight per 100 parts by weight of component (A),
(C-1) an alkoxysilane compound having the general formula (3):
[Chem. 3]
R³R⁴ₘSi(OR⁵)₃₋ₘ (3)
wherein R³ is a C₆-C₁₈ alkyl group, R⁴ is each independently a C₁-C₁₂ alkyl group, R⁵ is each independently a C₁-C₃ alkyl group, and m is an integer of 0 to 2,
(C-2) a dimethylpolysiloxane capped with a trialkoxysilyl group at one end of a molecular chain and having the general formula (4):
[Chem. 4] 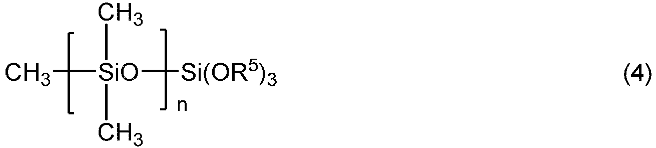 wherein R⁵ is as defined above, and n is an integer of 5 to 100.

5. The heat-conductive composition of any one of claims 1 to 4 wherein component (A) has at least two C₂-C₈ alkenyl groups in one molecule, the alkenyl groups being directly bonded to silicon, which composition further comprising
(D) a compound having at least two hydrogen atoms in one molecule in direct bond to silicon and not having a three-dimensional crosslinked structure: an amount in which a number w of hydrogen atoms directly bonded to silicon is 0.1 to 5.0 times a number of alkenyl groups in component (A), and
(E) a platinum-group metal catalyst: 0.1 to 2,000 ppm based on a weight of component (A) in terms of weight of platinum-group metal.

6. The heat-conductive composition of any one of claims 1 to 5 wherein a solvent content is up to 1% by weight based on a total weight of the composition.

7. The heat-conductive composition of any one of claims 1 to 6 which has a thermal conductivity of at least 3.0 W/mK.

8. A heat-conductive cured product formed by curing the heat-conductive composition of any one of claims 5 to 7.
